(19) Europäisches Patentamt
European Patent Office
Office européen des brevets

(11) **EP 3 359 941 B1**

(12) **EUROPÄISCHE PATENTSCHRIFT**

(45) Veröffentlichungstag und Bekanntmachung des Hinweises auf die Patenterteilung:
**04.11.2020 Patentblatt 2020/45**

(51) Int Cl.:
***G01M 3/20*** *(2006.01)*    ***G01M 3/22*** *(2006.01)*

(21) Anmeldenummer: **16777558.4**

(22) Anmeldetag: **20.09.2016**

(86) Internationale Anmeldenummer:
**PCT/EP2016/072270**

(87) Internationale Veröffentlichungsnummer:
**WO 2017/060072 (13.04.2017 Gazette 2017/15)**

(54) **ERFASSUNG VON PRÜFGASSCHWANKUNGEN BEI DER SCHNÜFFELLECKSUCHE**

DETECTING TEST GAS FLUCTUATIONS DURING SNIFFER LEAK SEARCHING

DÉTECTION DE FLUCTUATIONS DE GAZ DE TEST LORS DE LA RECHERCHE DE FUITE PAR RENIFLAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.10.2015 DE 102015219250**

(43) Veröffentlichungstag der Anmeldung:
**15.08.2018 Patentblatt 2018/33**

(73) Patentinhaber: **Inficon GmbH**
**50968 Köln (DE)**

(72) Erfinder:
• **WETZIG, Daniel**
**50968 Köln (DE)**
• **GERDAU, Ludolf**
**50968 Köln (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
EP-A1- 0 530 566    WO-A1-01/44775
DE-A1- 4 415 538    DE-A1-102007 043 382
US-A- 3 888 111

**Beschreibung**

Die Erfindung betrifft ein Verfahren und eine Vorrichtung zur Erfassung und Kompensation der Schwankungen von Prüfgas in dem mit einer Schnüffelsonde eines Leckdetektors angesaugten Gasstrom aus der Umgebungsatmosphäre eines mit $CO_2$ als Prüfgas druckbeaufschlagten Prüflings.

WO 01/44775 A1 beschreibt ein Lecksuchverfahren, bei dem ein mit einem sauerstofffreien Gas als Prüfgas druckbeaufschlagter Prüfling mit einer Schnüffelsonde abgesucht wird und der mit der Schnüffelsonde angesaugte Gasstrom mit einem Sauerstoffsensor analysiert wird.

US 3,888,111 A beschreibt eine Leckdetektionsvorrichtung für versiegelte Kraftfahrzeuglampen, die in einer evakuierten Prüfkammer angeordnet werden.

DE 10 2007 043 382 A1 beschreibt einen Schnüffellecksucher mit einer Schnüffelsonde mit einer ersten, zu einem Hauptgerät führenden Saugleitung und einer größeren zweiten Saugleitung, durch die Gas aus der Schnüffelspitze ansaugbar ist.

DE 44 15 538 A1 beschreibt ein Verfahren zum Überwachen eines Sensors zur Ermittlung eines Gasgehaltes.

Die Schnüffellecksuche ist ein etabliertes Verfahren, insbesondere zur Lokalisierung von Leckagen. Hierzu wird ein auf Dichtheit zu prüfender Hohlkörper (Prüfling) mit einem Prüfgas mit Überdruck beaufschlagt. Mit einer Schnüffelsonde wird an den zu prüfenden Stellen des Prüfobjektes Luft eingesogen. Tritt an der geprüften Stelle Leckagegas aus dem Prüfling aus, so wird dieses mit dem Luftstrom eingesogen und erzeugt eine Erhöhung der Prüfgaskonzentration in dem eingesogenen Luftstrom. Diese Erhöhung der Konzentration wird als Maß für die Leckagerate ausgewertet. Hierzu wird der Partialdruck des Prüfgases mit einem geeigneten Prüfgasdetektor gemessen. Dieser Detektor befindet sich an geeigneter Stelle in dem Prüfsystem.

Der Detektor kann direkt an der Schnüffelspitze der Schnüffelsonde positioniert sein, oder im Handgriff oder auch im Hauptgerät des Leckdetektors vor oder hinter der gasfördernden Einheit (Pumpe, Kompressor) angeordnet sein. Die gasfördernde Einheit erzeugt den von der Schnüffelsonde angesaugten Gasstrom.

Bei konstanter Konzentration des Prüfgases in der Prüfumgebung gilt für die Gesamt-Konzentration im Schnüffelgasstrom an der Leckage-Stelle:

$$c = \frac{Q_{Leckage}}{Q_{FL}} \cdot (1 - c_0) + c_0$$

$Q_{Leckage}$   Prüfgasleckrate
$Q_{FL}$   Schnüffelgasstrom
$c_0$   konstanter Offset an Prüfgas in der Luft
c   effektive $CO_2$-Konzentration im Schnüffelgasstrom

$c_0$ ist also die Anfangskonzentration des Prüfgases im angesaugten Gasstrom (Trägergasstrom). c ist die Prüfgaskonzentration, die den aus einem Leck heraustretenden Prüfgasanteil enthält. $Q_{Leckage}$ ist die Austrittsrate des Prüfgases am Leck. $Q_{FL}$ kann auch als Trägergasfluss bezeichnet werden.

Die Schnüffellecksuche bei Verwendung des Prüfgases $CO_2$ wird stark durch die $CO_2$-Schwankungen der Umgebungskonzentration negativ beeinflusst. Die $CO_2$ Konzentration von "Frischluft" beträgt etwa 400ppm. Jedoch wird diese Konzentration durch verschiedene $CO_2$ Emittenten erhöht, zum Beispiel Atemgas vom Bediener, Abgaswolken von Verbrennungsmaschinen, etc.

Bei der Verbrennung von Fetten, Proteinen und Kohlehydraten im Körper des Bedieners wird Sauerstoff verbraucht, zum Beispiel lautet die chemische Reaktionsgleichung für die Oxidation von Glukose (Zucker): $C_6H_{12}O_6 + 6\,O_2 \rightarrow 6\,CO_2 + 6\,H_2O$ + Energie.

Diese Instabilität der Umgebungskonzentration limitiert die kleinste nachweisbare Leckrate wesentlich.

Der Erfindung liegt die Aufgabe zugrunde, Schwankungen von Prüfgas in dem mit einer Schnüffelsonde eines Leckdetektors angesaugten Gasstrom zu erfassen. Das erfindungsgemäße Verfahren ist definiert durch die Merkmale von Patentanspruch 1. Die erfindungsgemäße Vorrichtung ist definiert durch die Merkmale von Patentanspruch 5.

Als Prüfgas wird ein möglichst sauerstofffreies Gas eingesetzt, das zumindest einen Anteil an $CO_2$ aufweist. Neben $CO_2$ kann das Prüfgas auch weitere sauerstofffreie Anteile aufweisen. Insbesondere kann es sich bei dem Prüfgas um $CO_2$ handeln. Entscheidend ist, dass ein Sauerstoffanteil in dem mit Prüfgas befüllten Prüfling vernachlässigbar oder nicht vorhanden ist.

Die Erfindung basiert somit auf dem Grundgedanken, den Sauerstoffanteil in der den Prüfling umgebenden Atmosphäre und möglichst in dem von der Schnüffelsonde angesaugten Gasstrom zu erfassen. Dieser Sauerstoffanteil soll als Hinweis auf denjenigen $CO_2$-Anteil im angesaugten Gasstrom dienen, der nicht aus einem Leck des Prüflings resultiert. Hierzu kann näherungsweise angenommen werden, dass eine Abnahme der Sauerstoffkonzentration in der umgebenden Atmosphäre proportional zu einer entsprechenden Zunahme der $CO_2$-Konzentration ist. Die Messung kann mit einem Massenspektrometer oder einem anderen den Prüfgaspartialdruck messenden Sensor erfolgen. Bevorzugt erfolgt die Messung des Sauerstoffanteils mit Hilfe einer Lambda-Sonde und möglichst bei atmosphärischem Druck.

Im Atemgas der den Leckdetektor bedienenden Person ist die Sauerstoffkonzentration gegenüber der umgebenden Atmosphäre reduziert und der $CO_2$-Anteil erhöht. Wenn das Atemgas der bedienenden Person von der Schnüffelsonde eingesogen wird, erhöht sich der $CO_2$-Anteil in dem angesogenen Gasstrom, was zu einer Verfälschung des Messergebnisses führen würde, wenn der Prüfling mit $CO_2$ als Prüfgas druckbeaufschlagt wird. Die $CO_2$-Sonde des Leckdetektors kann nicht beurteilen, ob ein $CO_2$-Anteil aus einem Leck des Prüflings oder aus der umgebenden Atmosphäre, beispielsweise durch Atemgas des Bedieners, resultiert. Dieser die Messung verfälschende $CO_2$-Anteil in der umgebenden Atmosphäre, der nicht aus einem Leck des Prüflings resultiert, wird im Folgenden als Offset bezeichnet. Dieser Offset kann auch beispielsweise aus dem Abgas von Verbrennungsmaschinen resultieren.

Mit Hilfe der Sauerstoffsonde wird der $O_2$-Anteil in der umgebenden Atmosphäre bzw. in dem von der Schnüffelsonde angesaugten Gasstrom ermittelt. Dieser Sauerstoffanteil kann nicht aus einem Leck des Prüflings entstammen, wenn der Prüfling mit sauerstofffreiem Prüfgas, zum Beispiel ausschließlich mit $CO_2$ als Prüfgas, gefüllt ist. Somit kann aus dem gemessenen Sauerstoffanteil auf den Offset-$CO_2$-Anteil geschlossen werden.

Dieser Offset $c_2(t)$ setzt sich zusammen aus einem konstanten Offset $c_0$ in der angesaugten Luft und aus einem zeitabhängig schwankenden Offset $c_1(t)$ an Prüfgas in der angesaugten Luft. Die Berechnung des Offsets $c_2(t)$ kann folgendermaßen erfolgen:

| | |
|---|---|
| $Q_{Leckage}$ | Prüfgasleckrate |
| $Q_{FL}$ | Schnüffelgasstrom |
| $Q_{Leckage} < Q_{FL}$ $c_0; c_1; c_2 < 1$ c | effektive $CO_2$-Konzentration im Schnüffelgasstrom |
| $c_0$ | konstanter Offset an Prüfgas in der Luft |
| $c_1(t)$ | zeitabhängiger Offset an Prüfgas in der Luft |
| $c_2(t) = c_0 + c_1(t)$ | gesamter Offset an Prüfgas in Luft |
| a | Verhältnisfaktor zwischen $O_2$-Konzentration und $CO_2$-Konzentration |
| b | Empfindlichkeitsfaktor für $O_2$ der Lambda-Sonde |
| $\Delta I$ | Signal der Lambda-Sonde |
| $\Delta c_{O_2}$ | Änderung der $O_2$-Konzentration |

$$\Delta c_1(t) = a \cdot \frac{1}{\Delta c_{O_2}}$$

$$\Delta c_{O_2} = b \cdot \Delta I$$

$$Q_{Leckage} = Q_{FL} \cdot \left[ \frac{c - c_2(t)}{1 - c_2(t)} \right]$$

$$\text{mit } c_2(t) = c_0 + \frac{a}{b} \cdot \frac{1}{\Delta I(t)}$$

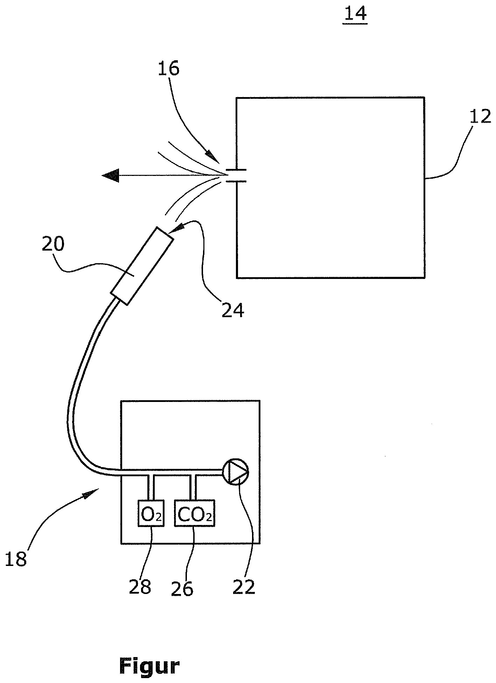

Im Folgenden wird anhand der Figur ein Ausführungsbeispiel der Erfindung näher erläutert. Die Figur zeigt eine schematische Darstellung eines Ausführungsbeispiels der erfindungsgemäßen Vorrichtung.

Bei dem Prüfling 12 kann es sich beispielsweise um eine Lebensmittelverpackung handeln. Der Prüfling 12 wird gegenüber der umgebenden Atmosphäre 14 mit Überdruck druckbeaufschlagt und sauerstofffrei mit Prüfgas mindestens des Typs $CO_2$ gefüllt. Durch ein Leck 16 strömt das Prüfgas aufgrund des Überdrucks gegenüber der umgebenden Atmosphäre 14 aus.

Der Leckdetektor 18 arbeitet nach dem Prinzip der Schnüffellecksuche und weist hierzu eine Schnüffelsonde 20 auf, die mit einer Pumpe 22 oder einem Kompressor 22 verbunden ist. Die Pumpe 22 bzw. der Kompressor 22 erzeugen einen Gasstrom, der durch den Einlass 24 der Schnüffelsonde 20 angesaugt wird. Der Leckdetektor 18 weist

ferner einen auf $CO_2$ ansprechenden Partialdrucksensor 26 in Form eines Massenspektrometers auf, der den $CO_2$-Prüfgasanteil in dem von der Schnüffelsonde 20 angesaugten Gasstrom ermittelt. Wenn die Schnüffelsonde 20 entlang der Außenfläche des Prüflings 12 in Richtung des Lecks 16 bewegt wird, steigt der Prüfgasanteil in dem angesaugten Gasstrom, was mit Hilfe des Partialdrucksensors 26 erfasst werden kann.

Der $CO_2$-Anteil in dem angesaugten Gasstrom kann jedoch auch aus anderen Gründen ansteigen, beispielsweise wenn das Atemgas der die Schnüffelsonde 20 führenden Person von der Schnüffelsonde angesaugt wird oder sich die Schnüffelsonde 20 in der Nähe des Abgasstroms eines Verbrennungsmotors befindet. In diesem Fall erfasst der Partialdrucksensor 26 einen ansteigenden $CO_2$-Anteil. Um zu verhindern, dass dies fälschlicherweise als Hinweis auf ein Leck 16 des Prüflings 12 gedeutet wird, ist erfindungsgemäß ein Sauerstoffsensor 28 vorgesehen, der den $O_2$-Anteil in dem angesaugten Luftstrom misst.

Bei dem Sauerstoffsensor 28 kann es sich um einen den Partialdruck von Sauerstoff erfassenden Sensor, zum Beispiel ein Massenspektrometer, oder auch zum Beispiel um eine herkömmliche Lambda-Sonde handeln.

Der Sauerstoffsensor 28 ist bei dem dargestellten Ausführungsbeispiel in dem Gasstrom zwischen der Schnüffelsonde 20 und der Pumpe 22 angeordnet. Alternativ kann der Sauerstoffsensor direkt in dem Handgriff 20 vorgesehen sein oder am Auslass der Pumpe 22 deren Abgasstrom messen.

Der gemessene Sauerstoffanteil wird herangezogen, um denjenigen $CO_2$-Anteil in dem angesaugten Gasstrom zu erfassen, der nicht aus einem Leck 16 des Prüflings 12 stammt, sondern aus einer Verbrennung von Sauerstoff resultiert.

**Patentansprüche**

1. Verfahren zur Erfassung und Kompensation von Schwankungen des $CO_2$-Anteils in dem mit einer Schnüffelsonde (20) eines Leckdetektors (18) angesaugten Gasstrom aus der Umgebungsatmosphäre (14) eines mit sauerstofffreiem und mindestens einen $CO_2$-Anteil aufweisenden Prüfgas druckbeaufschlagten Prüflings (12), wobei der $CO_2$-Prüfgasanteil in dem angesaugten Gasstrom erfasst wird,
   **dadurch gekennzeichnet,**
   **dass** der Sauerstoffanteil der Umgebungsluft gemessen wird und
   **dass** aus dem gemessenen Sauerstoffanteil der Umgebungsluft auf denjenigen $CO_2$-Anteil der Umgebungsluft, der nicht aus einer Leckage des Prüflings (12) resultiert, geschlossen wird, wobei eine Abnahme der Sauerstoffkonzentration in der Umgebungsluft proportional zu einer entsprechenden Zunahme der $CO_2$-Konzentration in der Umgebungsluft ist.

2. Verfahren nach Anspruch 1, **dadurch gekennzeichnet, dass** die Messung bei atmosphärischem Druck der Umgebungsatmosphäre (14) des Prüflings (12) erfolgt.

3. Verfahren nach einem der vorhergehenden Ansprüche, **dadurch gekennzeichnet, dass** die Messung des Sauerstoffanteils in dem Gasstrom der Schnüffelsonde (20) oder in dem Abgasstrom einer mit der Schnüffelsonde (20) verbundenen gasfördernden Pumpe (22) des Leckdetektors (18) erfolgt.

4. Verfahren nach einem der vorhergehenden Ansprüche, **dadurch gekennzeichnet, dass** der Offset $c_2(t)$ des im angesaugten Gasstroms enthaltene Prüfgasanteil, der nicht aus einem Leck (16) des Prüflings (12) stammt, aus der Beziehung

$$c_2(t) = c_0 + c_1(t) \text{ mit } c_1(t) = \frac{a}{b} \cdot \frac{1}{\Delta I(t)}$$

   ermittelt wird, wobei

   $c_0$ der konstante Offset an $CO_2$ in der angesaugten Luft,
   $c_1(t)$ der zeitabhängige Offset-Anteil an $CO_2$ in der angesaugten Luft,
   a der Verhältnisfaktor zwischen der gemessenen Sauerstoffkonzentration und der vorhandenen $CO_2$-Offset-Konzentration,
   b der Empfindlichkeitsfaktor für den Sauerstoffanteil der Sauerstoffsonde und
   $\Delta I(t)$ die Änderung des Messsignals der Sauerstoffsonde sind.

5. Vorrichtung zur Schnüffellecksuche gemäß dem Verfahren nach Anspruch 1, mit einer Schnüffelsonde (20) eines Leckdetektors (18), wobei die Schnüffelsonde (20) mit einer gasfördernden Pumpe (22) zum Ansaugen und Messen des Gases, das aus einem mit einem Prüfgas gegenüber der umgebenden Atmosphäre (14) druckbeaufschlagten Prüfling (12) in die den Prüfling (12) umgebende Atmosphäre ausströmt, versehen ist, wobei das Prüfgas (12) sauerstofffrei ist und mindestens einen $CO_2$-Anteil aufweist, und mit einem auf $CO_2$ ansprechenden Partialdrucksensor

**dadurch gekennzeichnet,**

**dass** ein Sauerstoffsensor (28) zur Messung des Sauerstoffanteils in dem von der Schnüffelsonde (20) angesaugten Gasstrom vorgesehen ist und

**dass** die Vorrichtung dazu ausgebildet ist, aus dem gemessenen Sauerstoffanteil der Umgebungsluft auf denjenigen $CO_2$-Anteil der Umgebungsluft, der nicht aus einer Leckage des Prüflings (12) resultiert, zu schließen, wobei eine Abnahme der Sauerstoffkonzentration in der Umgebungsluft proportional zu einer entsprechenden Zunahme der $CO_2$-Konzentration der Umgebungsluft ist.

6. Vorrichtung nach Anspruch 5, **dadurch gekennzeichnet, dass** der Sauerstoffsensor eine Lambda-Sonde ist.

7. Vorrichtung nach Anspruch 5, **dadurch gekennzeichnet, dass** der Sauerstoffsensor ein den Partialdruck von Sauerstoff erfassender Sensor ist.

8. Vorrichtung nach einem der Ansprüche 5 - 7, **dadurch gekennzeichnet, dass** der Sauerstoffsensor stromaufwärts der Pumpe (22) zur Messung des die Schnüffelsonde (20) durchströmenden Gasstromes oder stromabwärts der Pumpe (22) zur Messung des Abgasstromes der gasfördernden Pumpe (22) angeordnet und ausgebildet ist.

**Claims**

1. A method for detecting and compensating for fluctuations in the amount of $CO_2$ detected by a sniffer probe (20) of a leak detector (18) in the gas flow aspirated from the ambient atmosphere of a test piece (12) pressurized with an oxygen-free test gas containing at least one amount of $CO_2$, wherein the amount of COt in the test gas in the aspirated gas flow is detected,

   **characterized in**

   **that** the amount of oxygen in the ambient air is measured and

   **that** the amount of $CO_2$ of the ambient air that does not result from a leak in the test piece (12) is concluded from the measured amount of oxygen in the ambient air, wherein a decrease in the oxygen concentration in the ambient air is proportional to a corresponding increase in the $CO_2$ concentration in the ambient air.

2. The method according to claim 1, **characterized in that** the measurement is taken at atmospheric pressure of the ambient atmosphere (14) of the test piece (12).

3. The method according to one of the preceding claims, **characterized in that** the amount of oxygen in the gas flow of the sniffer probe (20) or in the exhaust gas flow of a gas-conveying pump (22) of the leak detector (18) connected to the sniffer probe (20) is measured.

4. The method according to one of the preceding claims, **characterized in that** the offset $c_2$ ($t$) of the amount of test gas that is contained in the aspirated gas flow and that does not result from a leak (16) in the test piece (12) is determined using the equation:

$$c_2\left(t\right) = c_0 + c_1(t) \text{ where } c_1(t) = \frac{a}{b} \cdot \frac{1}{\Delta I(t)}$$

   where

   $c_0$ is the constant offset of $CO_2$ in the aspirated air,
   $c_1$ ($t$) is the time-dependent offset amount of $CO_2$ in the aspirated air,
   a is the ratio factor between the measured oxygen concentration and the existing $CO_2$ offset concentration,
   b is the sensitivity factor for the amount of oxygen of the oxygen probe, and,
   $\Delta I(t)$ is the change in the measurement signal of the oxygen probe.

5. A device for sniffer leak detection according to the method of claim 1, having a sniffer probe (20) of a leak detector (18), wherein the sniffer probe (20) is provided with a gas-conveying pump (22) for aspirating and measuring the gas that flows into the atmosphere out of a test piece (12) pressurized with a test gas relative to the ambient atmosphere (14) surrounding the test piece (12), wherein the test gas (12) is oxygen-free and has at least an amount of $CO_2$, and having a partial pressure sensor sensitive to $CO_2$,
**characterized in**
**that** an oxygen sensor (28) for measuring the amount of oxygen in the gas flow aspirated by the sniffer probe (20) is provided and
**that** the device is configured to conclude on the amount of $CO_2$ of the ambient air that does not result from a leak in the test piece (12) from the measured amount of oxygen in the ambient air, wherein a decrease in the oxygen concentration in the ambient air is proportional to a corresponding increase in the $CO_2$ concentration in the ambient air.

6. The device according to claim 5, **characterized in that** the oxygen sensor is a lambda probe.

7. The device according to claim 5, **characterized in that** the oxygen sensor is a sensor that detects the partial pressure of oxygen.

8. The device according to any of claims 5 - 7, **characterized in that** the oxygen sensor is arranged and embodied upstream of the pump (22) for measuring the gas flow that flows through the sniffer probe (20) or is arranged and embodied downstream of the pump (22) for measuring the exhaust gas flow of the gas-conveying pump (22).


**Revendications**

1. Procédé de saisie et de compensation d'oscillations de la fraction de $CO_2$ dans le flux gazeux aspiré avec une sonde de reniflement (20) d'un détecteur de fuites (18) depuis l'atmosphère environnante (14) d'un échantillon (12) se voyant appliquer une pression d'un gaz de contrôle dépourvu d'oxygène et présentant au moins une fraction de $CO_2$, dans lequel la fraction de $CO_2$ du gaz de contrôle dans le flux de gaz aspiré est enregistrée,

   **caractérisé en ce que**
   la fraction d'oxygène de l'air environnant est mesurée et
   **en ce que** la fraction de $CO_2$ de l'air environnant ne résultant pas d'une fuite de l'échantillon (12) est déduite à partir de la fraction d'oxygène mesurée dans l'air environnant, dans lequel une diminution de la concentration d'oxygène dans l'air environnant est proportionnelle à une augmentation correspondante de la concentration de $CO_2$ dans l'air environnant.

2. Procédé selon la revendication 1, **caractérisé en ce que** la mesure s'effectue avec une atmosphère environnante (14) de l'échantillon (12) à pression atmosphérique.

3. Procédé selon l'une des revendications précédentes, **caractérisé en ce que** la mesure de la fraction d'oxygène s'effectue dans le flux gazeux de la sonde de reniflement (20) ou dans le flux de gaz d'échappement d'une pompe de transport de gaz (22) du détecteur de fuite (18) reliée à la sonde de reniflement (20).

4. Procédé selon l'une des revendications précédentes, **caractérisé en ce que** le décalage $c_2(t)$ de la fraction de gaz de contrôle contenue dans le flux gazeux aspiré ne provenant pas d'une fuite (16) de l'échantillon (12) est déterminé à partir de la relation

$$c_2(t) = c_0 + c_1(t) \text{ avec } c_1(t) = a/b \cdot 1/\Delta I(t)$$

dans lequel

$c_0$ est le décalage constant du $CO_2$ dans l'air aspiré,
$c_1(t)$ est la fraction dépendante du temps du décalage du $CO_2$ dans l'air aspiré,
a est le facteur proportionnel entre la concentration d'oxygène mesurée et la concentration décalée de $CO_2$ existante,
b est le facteur de sensibilité pour la fraction d'oxygène de la sonde d'oxygène et

ΔI($t$) est la variation du signal de mesure de la sonde d'oxygène.

5. Dispositif de recherche de fuite par reniflement conformément au procédé selon la revendication 1, doté d'une sonde de reniflement (20) d'un détecteur de fuites (18), dans lequel la sonde de reniflement (20) est prévue dotée d'une pompe de transport de gaz (22) pour aspirer et mesurer le gaz, sortant d'un échantillon (12) auquel est appliqué une pression avec un gaz de contrôle par rapport à l'atmosphère environnante (14) vers l'atmosphère entourant l'échantillon (12), dans lequel le gaz de contrôle (12) est dépourvu d'oxygène et présente au moins une fraction de $CO_2$, et doté d'un capteur de pression partielle de $CO_2$,

   **caractérisé en ce**
   **qu'**un capteur d'oxygène (28) est prévu pour mesurer la fraction d'oxygène dans le flux de gaz aspiré par la sonde de reniflement (20) et
   en ce que le dispositif est réalisé de façon à déduire la fraction de $CO_2$ de l'air environnant ne résultant pas d'une fuite de l'échantillon (12) à partir de la fraction d'oxygène mesurée dans l'air environnant, dans lequel une diminution de la concentration d'oxygène dans l'air environnant est proportionnelle à une augmentation correspondante de la concentration de $CO_2$ dans l'air environnant.

6. Dispositif selon la revendication 5, **caractérisé en ce que** le capteur d'oxygène est une sonde lambda.

7. Dispositif selon la revendication 5, **caractérisé en ce que** le capteur d'oxygène est un capteur enregistrant la pression partielle d'oxygène.

8. Dispositif selon l'une des revendications 5 à 7, **caractérisé en ce que** le capteur d'oxygène est disposé et réalisé en amont de la pompe (22) afin de mesurer le flux de gaz traversant la sonde de reniflement (20) ou en aval de la pompe (22) afin de mesurer le gaz d'échappement de la pompe de transport de gaz (22).

**Figur**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0144775 A1
- US 3888111 A
- DE 102007043382 A1
- DE 4415538 A1